(19) Europäisches Patentamt
European Patent Office
Office européen des brevets

(11) **EP 1 678 808 B1**

(12) **EUROPÄISCHE PATENTSCHRIFT**

(45) Veröffentlichungstag und Bekanntmachung des Hinweises auf die Patenterteilung:
**24.04.2013 Patentblatt 2013/17**

(21) Anmeldenummer: 04765545.1

(22) Anmeldetag: **23.09.2004**

(51) Int Cl.:
*H02K 5/24* (2006.01)    *F16F 7/10* (2006.01)

(86) Internationale Anmeldenummer:
**PCT/EP2004/010689**

(87) Internationale Veröffentlichungsnummer:
**WO 2005/034311 (14.04.2005 Gazette 2005/15)**

(54) **Verfahren zur Änderung des Schwingungsverhaltens eines Maschinensystems**

Method for altering the vibration characteristics of a motor system

Procédé permettant de modifier le comportement de vibration d'un système moteur

(84) Benannte Vertragsstaaten:
**DE FR**

(30) Priorität: **29.09.2003 DE 10345605**

(43) Veröffentlichungstag der Anmeldung:
**12.07.2006 Patentblatt 2006/28**

(73) Patentinhaber: **Siemens Aktiengesellschaft 80333 München (DE)**

(72) Erfinder: **WERNER, Ulrich 91088 Bubenreuth (DE)**

(56) Entgegenhaltungen:
**EP-A- 0 698 750      WO-A-02/48572
DE-A- 3 347 555      DE-A- 10 150 031
JP-A- 7 154 940      US-A- 5 266 856**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum Betrieb eines Maschinensystems, welches eine elektrische Maschine und einen Aufsatzkühler aufweist. Der Aufsatzkühler ist an der elektrischen Maschine mittels Befestigungssystemen angebracht. Ein Befestigungssystem ist beispielsweise eine Schraubverbindung, welche eine Schraube bzw. eine Mutter bzw. ein Innengewinde aufweist.

Elektrische Maschinen und das jeweilige Fundament weisen gemeinsame Systemeigenfrequenzen auf. Maschinensysteme bzw. elektrische Maschinen werden insbesondere entsprechend gültiger Normen und Spezifikationen hinsichtlich ihres Schwingungsverhaltens meist für eine harte Aufstellung ausgelegt. Elektrische Maschinen-Fundament-Systeme, deren Systemeigenfrequenzen den Anregungsfrequenzen aus Drehfrequenz und/oder vorzugsweise bei 2-poligen Maschinen der doppelten Netzfrequenz entsprechen, können zu erheblichen Schwingungsproblemen führen. Motoren, die bei Abnahmeprüfungen, bei denen "harte" Fundamente vorhanden sind, keine schwingungstechnischen Beanstandungen aufweisen, können bei Kunden mit "weichen" Fundamenten dennoch zu Schwingungsproblemen führen. Bei einer vorgesehenen Aufstellung des Maschinensystems auf einem Fundament wird bei der Auslegung des Fundamentes seitens eines Anlagenbauers häufig das Schwingungsverhalten des Maschinensystems auf einem Originalfundament nicht betrachtet. Dies führt in vielen Fällen dazu, dass eine elastische Aufstellung vorliegt. Durch eine elastische Aufstellung werden jedoch die Systemeigenfrequenzen des Maschinensystems bzw. der elektrischen Maschine verändert. Dies kann zu Schwingungsproblemen führen, wenn eine der Systemeigenfrequenzen des Maschinensystems bzw. der elektrischen Maschine im Bereich einer anregenden Frequenz liegt.

Ergeben sich beispielsweise Schwingungsprobleme im Betrieb des Maschinensystems oder werden Schwingungsanforderungen von Normen oder Kunden nicht erfüllt, so sind derartige Schwingungsprobleme, welche insbesondere durch einen resonanznahen Betrieb hervorgerufen sind, beispielsweise durch zumindest der folgenden Maßnahmen möglicherweise überwindbar:

1) Änderung der Fundamentsteifigkeit, problematisch ist jedoch

a) Meist nachträglich nicht möglich.
b) Bei Änderung des Fundaments wird oftmals nicht nur die eine gewünschte Steifigkeitsrichtung geändert, sondern auch die anderen Steifigkeitsrichtungen mit verändert.
c) Oftmals ist die Ermittlung der Fundamentsteifigkeit schwierig.

2) Betriebswuchten der Maschine auf originalem Fundament zur Minimierung der Anregung;
3) Entwicklung/Bau neuer Rotoren; ⇒ Verzögerung hinsichtlich Inbetriebsetzung.

Derartige Maßnahmen sind äußerst aufwendig, kostenintensiv bzw. auch zeitintensiv.

Aus der JP 07 154 940 A ist eine elektrische Maschine mit einer Rippe bekannt, wobei diese Rippe mittels Schraubverbindungen am Gehäuse angebracht ist. An diesem Gehäuse sind mehrere Rippen anbringbar, so dass auf diese Art und Weise das Schwingungsverhalten der Maschine beeinflussbar ist.

Aufgabe der Erfindung ist es, ein Verfahren zum Betreiben eines Maschinensystems anzugeben, bei dem auftretende Schwingungsprobleme in einfacher Weise gelöst werden.

Die Lösung dieser Aufgabe gelingt durch ein Verfahren zum Betrieb eines Maschinensystems mit den Merkmalen nach Anspruch 1. Die Unteransprüche 2 und 3 sind erfinderische Weiterbildungen des Verfahrens.

Ein Maschinensystem weist eine elektrische Maschine und einen Aufsatzkühler auf. Der Aufsatzkühler ist mittels eines Befestigungssystems an der elektrischen Maschine angebracht. Ein erstes Befestigungssystem ist dabei durch ein zweites Befestigungssystem austauschbar, wobei das erste Befestigungssystem und das zweite Befestigungssystem von einem unterschiedlichen Typ sind. Durch den Austausch der Befestigungssysteme unterschiedlichen Typs ist eine Änderung des Schwingungsverhaltens des Maschinensystems erzielbar.

Ein Befestigungssystem ist beispielsweise eine Schraubverbindung, welche zumindest eine Schraube und ein korrespondierendes Innengewinde bzw. eine Mutter aufweist. Die Schraube ist beispielsweise derart ausführbar, dass diese eine bestimmte Elastizität bzw. Federeigenschaft aufweist. Es sind Schrauben mit unterschiedlichen Eigenschaften ausbildbar. Das Befestigungssystem weist beispielsweise weiterhin eine Unterlegscheibe bzw. einen Sprengring oder ähnliches auf.

Die Lösung der Aufgabe gelingt ferner durch ein Maschinensystem, welches eine elektrische Maschine und einen Anbau aufweist, wobei der Anbau an der elektrischen Maschine mittels eines Befestigungssystems angebracht ist, wobei das Maschinensystem verschiedene Befestigungsstellen für die Anbringung des Anbaues an der elektrischen Maschine mittels Befestigungssysteme aufweist. Verschiedene Befestigungsstellen sind beispielsweise Bohrungen in einem Gehäuse einer elektrischen Maschine, welche zur Aufnahme von Schrauben vorgesehen sind. Mittels der Schrauben ist der Anbau an die elektrische Maschine über einen Schraubenkopf oder einer Mutter bzw. ein in den Anbau bzw.

in der elektrischen Maschine integriertes Innengewinde anbringbar. Die Befestigungsstellen sind nur teilweise durch ein Befestigungssystem belegt. Durch einen Wechsel der Belegung und/oder der Belegungsanzahl der Befestigungsstellen mit den Befestigungssystemen ist eine Änderung des Schwingungsverhaltens des Maschinensystems erzielbar. Das Schwingungsverhalten des Maschinensystems ist abhängig insbesondere vom Aufsatzkühler und dem Fundament, auf dem das Maschinensystem angebracht ist, bzw. auch von den Kopplungseigenschaften der Kopplung von Aufsatzkühler und elektrischer Maschine.

Durch den Wechsel verschiedener Befestigungsstellen bzw. durch die Auswahl verschiedener möglicher verwendbarer Befestigungsstellen ist der Aufsatzkühler an auswählbaren Befestigungsstellen, d.h. an auswählbaren Orten der Befestigung an der elektrischen Maschine anbringbar. Da die Kopplungssteifigkeiten bei einer unterschiedlichen Auswahl von Befestigungsstellen auch unterschiedlich auf den Aufsatzkühler bzw. die elektrische Maschine wirken, ist dadurch ein Einfluss auf das Schwingungsverhalten des Maschinensystems erzielbar. Bezüglich der Schwingungseigenschaft ist auch zu unterscheiden, welche Richtungskomponenten eine Schwingung aufweisen kann.

In einer vorteilhaften Ausgestaltung ist ein erstes Befestigungssystem durch ein zweites Befestigungssystem unterschiedlichen Typs austauschbar, wobei durch einen derartigen Austausch eine Änderung des Schwingungsverhaltens des Maschinensystems erzielbar ist. Die Auswahl unterschiedlicher Befestigungssysteme, d.h. Befestigungssysteme unterschiedlichen Typs, ist kombinierbar mit der Auswahl unterschiedlicher Befestigungsstellen.

In einer vorteilhaften Ausgestaltung weist das Befestigungssystem ein Kopplungselement auf. Das Kopplungselement ist insbesondere bei einer Schraubverbindung einsetzbar, wobei das Kopplungselement durch die Ausbildung der Schraubverbindung zwischen der elektrischen Maschine und dem Aufsatzkühler liegt. Die Lage des Kopplungselementes ist beispielsweise direkt bei einer Schraubverbindung oder von dieser Schraubverbindung entfernt. Ein Beispiel für ein Kopplungselement ist neben einer Beilagscheibe, einem Sprengring oder ähnlichen auch eine Gummilippe oder ein Abdichtring, welche insbesondere für eine Abdichtung verwendbar ist.

In einer vorteilhaften Ausgestaltung ist das Befestigungssystem oder das Kopplungselement als eine Feder und/oder als ein Dämpfer ausgebildet. Durch Feder- bzw. Dämpfereigenschaften des Kopplungselementes lässt sich das Schwingungsverhalten des Maschinensystems verändern bzw. abstimmen.

Als Material für das Kopplungselement bzw. für das Befestigungssystem ist beispielsweise ein Gummimaterial oder ein Kunststoffmaterial einsetzbar.

In einer vorteilhaften Ausgestaltung weist das Befestigungssystem und/oder das Kopplungssystem einen Tilger auf. Ein Tilger ist zur Aufnahme von Schwingungsenergie vorgesehen, so dass ein in Schwingung geratenes Maschinensystem durch Entzug von Energie in seiner Schwingung dämpfbar ist.

Der Aufsatzkühler ist zur Kühlung der elektrischen Maschine vorgesehen. Derartige Aufsatzkühler weisen eine ausreichende Masse auf, um das Maschinensystem in seinem Schwingungsverhalten zu beeinflussen. Weiterhin sind Aufsatzkühler bereits durch Befestigungssysteme an einer elektrischen Maschine angebracht. Aufsatzkühler sind beispielsweise als Luft-LuftKühler oder auch als Luft-Wasser-Kühler ausführbar.

In einer weiteren vorteilhaften Ausgestaltung weist der Aufsatzkühler bereits verschiedene Befestigungssysteme zur elektrischen Maschine auf, wobei die verschiedenen Befestigungssysteme unterschiedlichen Typs sind. Durch Auswahl der zur Befestigung vorgesehenen Befestigungssysteme ist dann das Schwingungsverhalten des Maschinensystems veränderbar. Weist beispielsweise eine Schraubverbindung ein Kopplungselement wie z.B. ein Gummistück zwischen dem Anbau und der elektrischen Maschine, insbesondere dem Gehäuse der elektrischen Maschine, auf, so ist die Schwingungseigenschaft des Maschinensystems durch den Ersatz des Kopplungselementes mit einem weicheren oder einem härterem Kopplungselement abänderbar.

Durch die Veränderung der Systemeigenfrequenz des Maschinensystems sind Schwingungsprobleme reduzierbar. Probleme entstehen insbesondere durch Anregungen bei der Eigenfrequenz des Maschinensystems. Die Eigenfrequenz ist also abzuändern. Die Veränderung der Systemeigenfrequenz gelingt insbesondere durch ein Einstellen einer Federankopplung zwischen Aufsatzkühler und elektrischer Maschine. Die Federankopplung ist mittels des Befestigungssystems ausgeführt. Beispielsweise können dadurch bei Maschinensystemen, welche eine elektrische Maschine mit einem Aufsatzkühler aufweisen, bei einer elastischen Aufstellung der elektrischen Maschine durch eine Änderung der Steifigkeit der Ankopplung des Aufsatzkühlers die Systemeigenfrequenz des Maschinensystems verschoben werden, so dass Schwingungsprobleme aufgrund Resonanznähe verhindert werden können. Zusätzlich kann bei Kenntnis der Fundamentsteifigkeit der Aufsatzkühler durch geeignete Wahl der Kühlerkopplungssteifigkeit als Tilger eingesetzt werden, um die Schwingungsamplituden eines Rotors oder eines Ständers der elektrischen Maschine oder die Amplitudendifferenz zwischen Ständer und Rotor zu tilgen.

In einer weiteren vorteilhaften Ausgestaltung des Motorsystems weist der Aufsatzkühler zumindest 1/20 der Masse der elektrischen Maschine auf.

In einem Verfahren zum Betrieb eines Maschinensystems, welches eine elektrische Maschine und einen Aufsatzkühler aufweist, wobei der Aufsatzkühler an der elektrischen Maschine mittels Befestigungssystemen angebracht ist und das Maschinensystem verschiedene Befestigungsstellen für die Anbringung des Aufsatzkühlers an der elektrischen Maschine mittels der Befestigungssysteme aufweist, werden die Befestigungsstellen nur teilweise durch Befestigungssysteme belegt. Die Belegung der Befestigungsstellen mit den Befestigungssystemen wird geändert. Dadurch wird das Schwingungsverhalten des Maschinensystems abgeändert.

Weist ein Maschinensystem verschiedene Befestigungsstellen auf, ist neben der Auswahl der Befestigungsstellen auch eine Auswahl von Befestigungssystemen unterschiedlichen Typs möglich. Wird ein erstes Befestigungssystem durch ein zweites Befestigungssystem unterschiedlichen Typs ausgetauscht, führt auch dies zu einer Änderung des Schwingungsverhaltens des Maschinensystems.

Vorteilhaft ist es auch, wenn die Auswahl der Befestigungsstellen zur Anbringung eines Befestigungssystems kombiniert wird mit der Auswahl verschiedener Befestigungssysteme unterschiedlichen Typs. Dadurch ergibt sich eine besonders hohe Varianz möglicher Veränderungen der Eigenfrequenz des Maschinensystems.

Die vorliegende Erfindung wird anhand der beigefügten Zeichnungen beispielhaft näher erläutert. Dabei zeigt:

FIG 1 ein Maschinensystem,
FIG 2 ein Befestigungssystem,
FIG 3 unterschiedliche Befestigungsstellen,
FIG 4 ein Dreimassenschwingungsmodell,
FIG 5 Biegeeigenfrequenzen und
FIG 6 Systemeigenfrequenzen in Abhängigkeit einer Kühlerankopplungssteifigkeit.

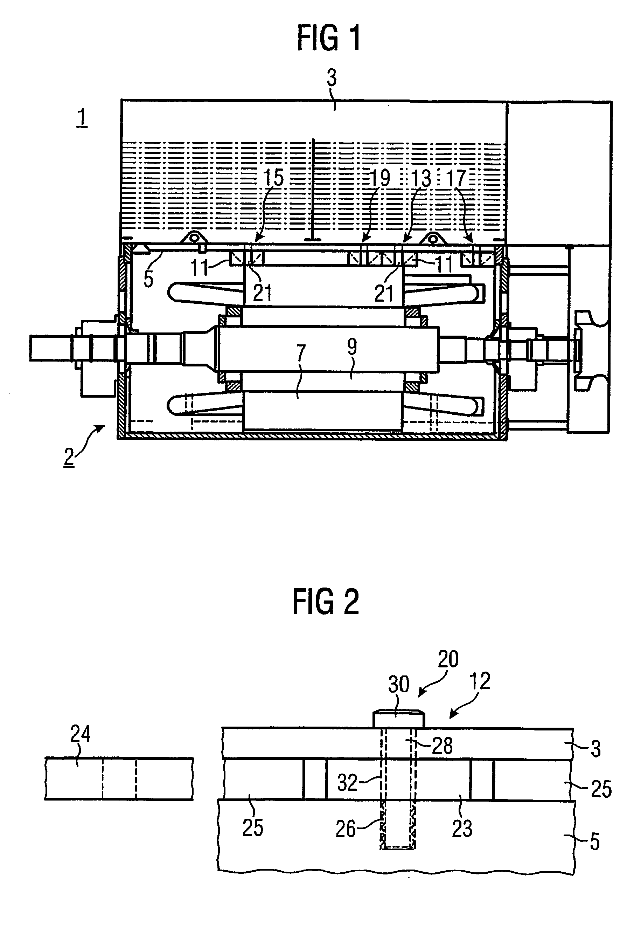

Die Darstellung gemäß FIG 1 zeigt ein Maschinensystem 1. Das Maschinensystem 1 weist eine elektrische Maschine 2 und einen Anbau 3 auf. Der Anbau 3 ist ein Aufsatzkühler. Die elektrische Maschine weist weiterhin einen Läufer 9, einen Ständer 7 und ein Gehäuse 5 auf. Der Anbau 3 ist mittels der Befestigungssysteme 11 und 12 an der elektrischen Maschine 2 befestigt. Die Befestigung erfolgt an Befestigungsstellen 13, 15, 17 und 19. Die Befestigung ist beispielsweise eine Schraubverbindung 21.

Die Darstellung gemäß FIG 2 zeigt einen Ausschnitt aus dem Gehäuse 5 der elektrischen Maschine, wobei das Gehäuse 5 ein Innengewinde 26 aufweist. In das Innengewinde 26 ist eine Schraube 28 eingedreht. Mittels eines Schraubenkopfes 30 erfolgt eine Verbindung zwischen dem Anbau 3 und dem Gehäuse 5 der elektrischen Maschine 2. Zwischen dem Anbau 3 und dem Gehäuse 5 befindet sich ein Kopplungselement 23. Das Kopplungselement 23 weist eine Bohrung 32 zur Durchführung der Schraube 28 auf. Das Kopplungselement 23 ist beispielsweise durch das Kopplungselement 24 ersetzbar, wobei die Kopplungselemente 23 und 24 von unterschiedlichen Typs sind. Sie unterscheiden sich beispielsweise durch die Dicke bzw. auch durch das Material. Neben direkt an der Befestigungsstelle 20 befindlichen Kopplungselementen 23, 24 sind auch alternativ oder in Kombination Kopplungselemente 25 einsetzbar, welche von der Befestigungsstelle 20 entfernt sind.

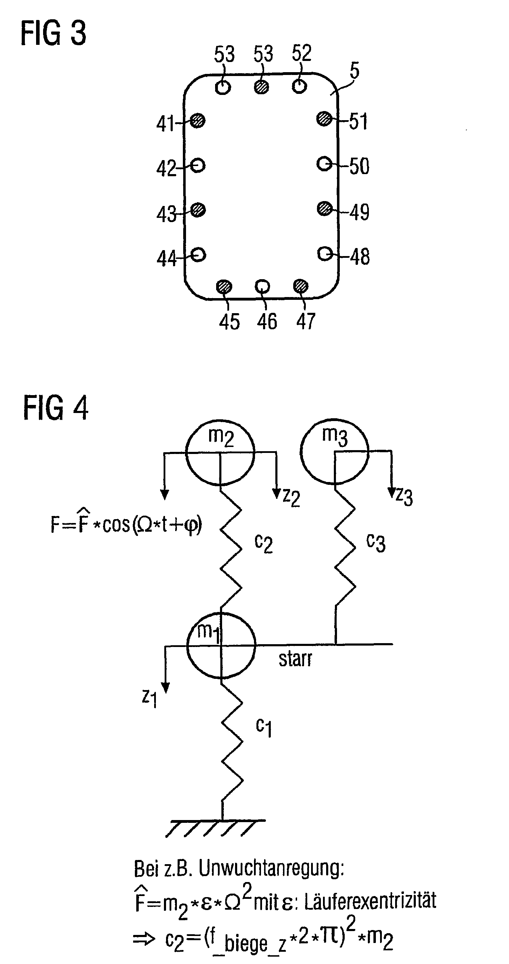

Die Darstellung gemäß FIG 3 dient zur Darstellung verschiedener Befestigungsstellen. Weist ein Gehäuse 5 verschiedene Befestigungsstellen auf, so ist beispielsweise nur die Hälfte dieser Befestigungsstellen jeweils für die Befestigung eines Anbaues 3 notwendig. Im vorliegenden Beispiel sind die Befestigungsstellen durch befüllte bzw. unbefüllte Kreise dargestellt. Ein Anbau 3 ist beispielsweise durch die Befestigungsstellen 41, 43, 45, 47, 49, 51 und 53 an ein Gehäuse 5 anbringbar, wobei auch eine Befestigung des Anbaues 3 an den Befestigungsstellen 42, 44, 46, 48, 50, 52 und 53 möglich ist. Durch die Auswahl der Befestigungsstellen lässt sich die Ankopplung des Anbaues 3 an die elektrische Maschine 2 ändern. Durch die Änderungen der Ankopplung ändert sich die Schwingungseigenschaft des Maschinensystems 1.

Die Darstellung gemäß FIG 4 zeigt ein Schwingungsmodell. Es ist ein Dreimassenschwingungsmodell dargestellt, wobei die drei Massen $m_1$, $m_2$ und $m_3$ die Hauptmassen eines Maschinensystems darstellen. $m_1$ stellt beispiels-weise die Motorgesamtmasse abzüglich der Massen $m_2$ und $m_3$ dar. Als $m_2$ ist die Läufermasse bezeichnet. $m_3$ ist die Masse des Aufsatzes 3, d.h. beispielsweise die Masse eines Aufsatzkühlers einer elektrischen Maschine 2. Über eine Kraft F ist das Dreimassensystem harmonisch anregbar. Das Schwingungsmodell beschreibt die Translation in vertikaler Richtung. Die drei Massen Ständer, Läufer und Kühler sind elastisch miteinander verbunden. Das Schwingungssystem wird durch eine harmonische Anregung der Läufermasse $m_2$ z.B. durch eine Unwuchtanregung zu erzwungenen Schwingungen angeregt. Die Steifigkeit innerhalb des Systems wird durch die Faktoren $c_1$, $c_2$ und $c_3$ gegeben. Dabei stellt $c_1$ die vertikale Fundamentsteifigkeit dar. $c_2$ steht für die vertikale Steifigkeit zwischen Läufermasse $m_2$ und Ständermasse $m_1$, wobei diese aus der ersten Biegeeigenform in z-Richtung berechnet ist. Der Parameter $c_3$ repräsentiert die vertikale Steifigkeit der tragenden Gummielemente zwischen dem Ständer 7 und dem Anbau 3, insbesondere dem Aufsatzkühler. Mit $\varepsilon$ ist die Läuferexzentrizität bezeichnet.

Die Schwingungsamplituden bei harmonischer Anregung des Läufers 9 ergeben sich wie folgt:

$$z_{1p} = \frac{-c_2 \, \hat{F} \cdot (m_3 \cdot \Omega^2 - c_3)}{\alpha}$$

$$z_{2p} = \frac{\hat{F} \cdot \left[(-m_1 \cdot \Omega^2 + c_1 + c_2 + c_3) \cdot (m_3 \, \Omega^2 - c_3) + c_3^2\right]}{\alpha}$$

$$z_{3p} = \frac{\hat{F} \cdot c_2 \cdot c_3}{\alpha}$$

Durch die Veränderung der Steifigkeit der Kopplung zwischen Anbau 3 und elektrischer Maschine 2 lassen sich die Systemeigenfrequenzen und somit die Resonanzstellen verschieben, da $\alpha$ eine Funktion von $c_3$ ist. Die Steifigkeit wird beispielsweise dadurch verändert, dass Kopplungselemente wie beispielsweise Gummielemente unterschiedlichen Typs, also unterschiedlicher Steifigkeit verwendet werden.

$$a = (-m_1 \cdot \Omega^2 + c_1 + c_2 + c_3) \cdot (m_2 \cdot \Omega^2 - c_2) \cdot (m_3 \cdot \Omega^2 - c_3) + c_2^2 \cdot (m_3 \cdot \Omega^2 - c_3) + c_3^2 \cdot (m_2 \cdot \Omega^2 - c_2)$$

In einer vorteilhaften Ausgestaltung ist die Masse des Anbaues 3, wie z.B. des Aufsatzkühlers, als Tilger einsetzbar. Bei vorgegebener Fundamentsteifigkeit ist also die Kühlermasse $m_3$ als Tilger einzusetzen. Dies kann ebenfalls durch geeignete Wahl der Kühlerankopplungssteifigkeit $c_3$ erfolgen.

Tilgen der Schwingungsamplitude $z_{1p}$ (Ständeramplitude):

Die Schwingungsamplitude $z_{1p}$ wird getilgt ($z_{1p} = 0$) bei der Kühlerankopplungssteifigkeit $c_3$:

$$c_3 = m_3 \cdot \Omega^2$$

Mit dieser Kühlerankopplungssteifigkeit $c_3$ ergeben sich die Amplituden:

$$z_{1p} = 0 \quad ; \quad z_{2p} = \frac{-\hat{F}}{\left(m_2 \cdot \Omega^2 - c_2\right)} \quad ; \quad z_{3p} = \frac{\hat{F} \cdot c_2}{\left(m_2 \cdot \Omega^2 - c_2\right) \cdot c_3}$$

Hierbei ist zu berücksichtigen, dass je höher die Aufstellungsfrequenz ist, desto näher liegt die Nullstelle an der Resonanz. Grund hierfür ist, dass die 1. Systemeigenfrequenz asymptotisch mit steigender Aufstellungsfrequenz gegen einen Grenzwert läuft:

$$\lim_{fa\to\infty} \omega_1 = \sqrt{\frac{c_3}{m_3}}$$

Tilgen der Schwingungsamplitude $z_{2p}$ (Läuferamplitude):

Die Schwingungsamplitude $z_{2p}$ wird getilgt ($z_{2p}=0$) bei der Kühlerankopplungssteifigkeit $c_3$:

$$c_3 = \frac{m_3 \cdot \Omega^2 \cdot \left[m_1 \cdot \Omega^2 - (c_1 + c_2)\right]}{(m_1 + m_3) \cdot \Omega^2 - (c_1 + c_2)} \equiv \bar{c_3}$$

Mit dieser Kühlerankopplungssteifigkeit $c_3$ ergeben sich die Amplituden:

$$z_{1p} = \frac{-c_2 \cdot \hat{F} \cdot (m_3 \cdot \Omega^2 - \bar{c_3})}{(-m_1 \cdot \Omega^2 + c_1 + c_2 + \bar{c_3}) \cdot (m_2 \cdot \Omega^2 - c_2) \cdot (m_3 \cdot \Omega^2 - \bar{c_3}) + c_2^2 \cdot (m_3 \cdot \Omega^2 - \bar{c_3}) + \bar{c_3}^2 \cdot (m_2 \cdot \Omega^2 - c_2)}$$

$$z_{2p} = 0$$

$$z_{3p} = \frac{c_2 \cdot \bar{c_3} \cdot \hat{F}}{(-m_1 \cdot \Omega^2 + c_1 + c_2 + \bar{c_3}) \cdot (m_2 \cdot \Omega^2 - c_2) \cdot (m_3 \cdot \Omega^2 - \bar{c_3}) + c_2^2 \cdot (m_3 \cdot \Omega^2 - \bar{c_3}) + \bar{c_3}^2 \cdot (m_2 \cdot \Omega^2 - c_2)}$$

Tilgen der Schwingungsamplitudendifferenz zwischen Ständer 7 und Läufer 9: $|z_{1p} - z_{2p}|$

Die Schwingungsamplitudendifferenz $|z_{1p} - z_{2p}|$ wird getilgt ($[z_{1p} - z_{2p}] = 0$) bei der Kühlerankopplungssteifigkeit $c_3$:

$$c_3 = \frac{m_3 \cdot \Omega^2 \cdot \left[m_1 \cdot \Omega^2 - c_1\right]}{(m_1 + m_3) \cdot \Omega^2 - c_1} \equiv \bar{\bar{c_3}}$$

Mit dieser Kühlerankopplungssteifigkeit $c_3$ ergeben sich die Amplituden:

$$z_{1p} = \frac{-c_2 \cdot \hat{F} \cdot (m_3 \cdot \Omega^2 - \bar{\bar{c_3}})}{(-m_1 \cdot \Omega^2 + c_1 + c_2 + \bar{\bar{c_3}}) \cdot (m_2 \cdot \Omega^2 - c_2) \cdot (m_3 \cdot \Omega^2 - \bar{\bar{c_3}}) + c_2^2 \cdot (m_3 \cdot \Omega^2 - \bar{\bar{c_3}}) + \bar{\bar{c_3}}^2 \cdot (m_2 \cdot \Omega^2 - c_2)}$$

$$z_{2p} = z_{1p}$$

$$z_{3p} = \frac{c_2 \cdot \overline{\overline{c_3}} \cdot \hat{F}}{(-m_1 \cdot \Omega^2 + c_1 + c_2 + \overline{\overline{c_3}}) \cdot (m_2 \cdot \Omega^2 - c_2) \cdot (m_3 \cdot \Omega^2 - \overline{\overline{c_3}}) + c_2^2 \cdot (m_3 \cdot \Omega^2 - \overline{\overline{c_3}}) + \overline{\overline{c_3}}^2 \cdot (m_2 \cdot \Omega^2 - c_2)}$$

Die Schwingungsamplitude $z_{3p}$ kann nicht getilgt werden.

Zur Berechnung eines Tilgens der Schwingungsamplitudendifferenz zwischen Ständer 7 und Läufer 9 $|z_{1p} - z_{2p}|$ kann beispielsweise wie folgt verfahren werden.

Daraus ergibt sich, dass keine Relativbewegung zwischen Läufermasse $m_2$ und Ständermasse $m_1$ mehr vorhanden ist.

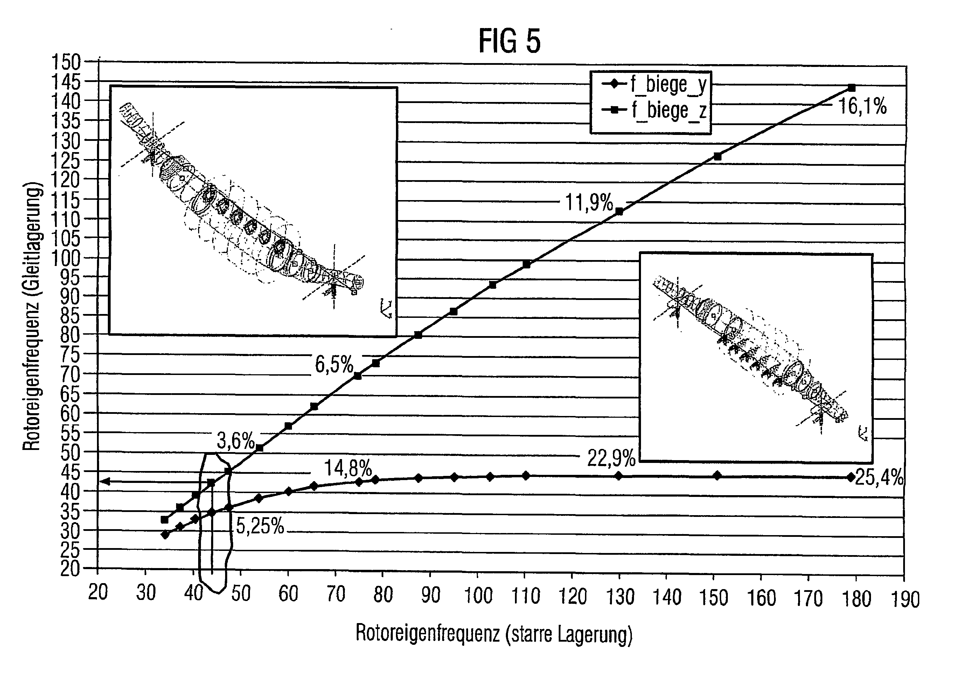

Die Darstellung gemäß FIG 5 zeigt die Abhängigkeit einer ersten Biegeeigenfrequenz Y bzw. Z bei Gleitlagerung mit Zylinderschale von der Rotoreigenfrequenz. Auf der Abzisse ist die Rotoreigenfrequenz bei Starterlagerung aufgetragen. Auf der Ordinate ist die Rotoreigenfrequenz bei Gleitlagerung aufgetragen.

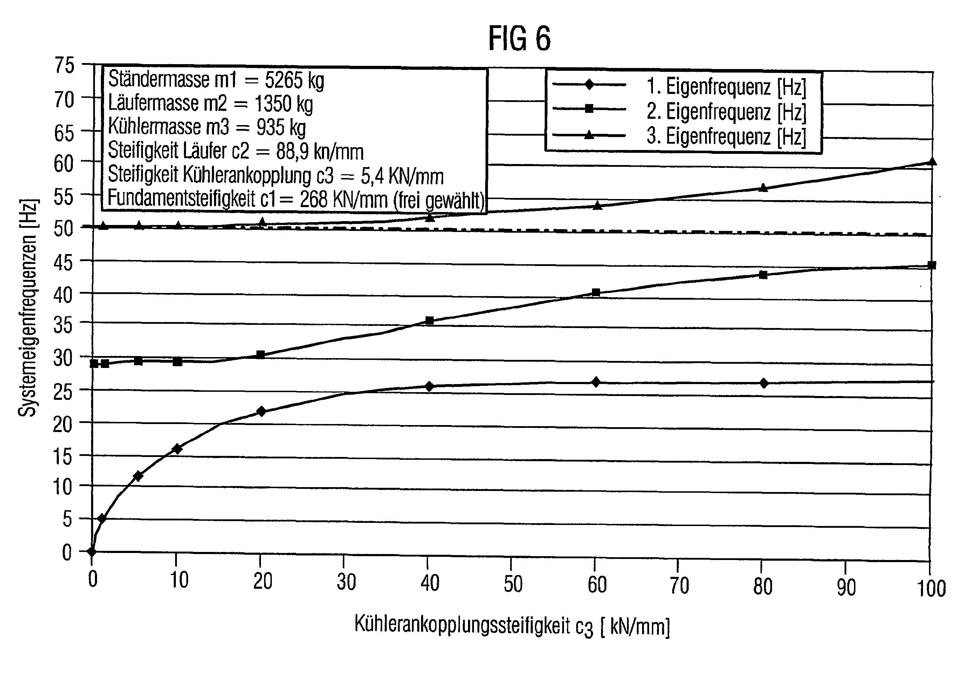

Die Darstellung gemäß FIG 6 zeigt ein Beispiel für eine Resonanzverschiebung. Im übrigen ist ein Befestigungssystem oder sind mehrere Befestigungssysteme vorgesehen. Ein Befestigungssystem ist beispielsweise eine Schraubverbindung, welche eine Schraube bzw. eine Mutter bzw. ein Innengewinde aufweist. Ein Beispiel für einen Anbau ist ein Aufsatzkühler für eine elektrische Maschine.

Bei einer vorgegebenen Fundamentsteifigkeit $c_1$ tritt in diesem Beispiel bei einem 50 Hz Betrieb Resonanz auf, da die 3. Systemeigenfrequenz ebenfalls bei circa 50 Hz liegt.

Durch die Veränderung der Kühlerankopplungssteifigkeit $c_3$ können die Systemeigenfrequenzen verschoben werden. Mit steigender Steifigkeit $c_3$ erhöhen sich die Systemeigenfrequenzen.

In dem vorhanden Beispiel kann durch die Erhöhung der Kühlerankopplungssteifigkeit von:

$$c_3 = 5,4 \ kN/mm \ \Rightarrow \ 80 \ kN/mm$$

ein ausreichender Abstand der Systemeigenfrequenzen zu der anregenden Rotordrehfrequenz $\Omega$ eingehalten werden. Hierbei ist jedoch zu berücksichtigen, dass mit zunehmender Kühlerankopplungssteifigkeit die Struktursteifigkeit des Kühlers an Bedeutung hinsichtlich der Systemeigenfrequenzen gewinnt.

Eine Anpassung der Maschine hinsichtlich Schwingungsoptimierung auf ein vorgegebenes Fundament ist also möglich.

Durch eine einfache Maßnahme, und zwar die Variation der Kühlerankopplungssteifigkeit, kann das Schwingungsverhalten optimiert werden. Resonanzen können verschoben, Amplituden bzw. Amplitudendifferenzen minimiert werden. Diese Maßnahme ist weitaus kostengünstiger und wesentlich weniger zeitintensiv als bislang durchgeführte Maßnahmen.

Vorteile der Erfindung ergeben sich auch daraus, dass eine Änderung einfach auf einer Anlage bzw. am Aufstellungsort des Maschinensystems 1 durchführbar sind. Dies erhöht den Kundennutzen.

## Patentansprüche

1. Verfahren zum Betrieb eines Maschinensystems (1), welches eine elektrische Maschine (2) und einen Aufsatzkühler (3) aufweist, wobei der Aufsatzkühler (3) an der elektrische Maschine (1) mittels Befestigungssystemen (11) angebracht ist, wobei das Maschinensystem (1) verschiedene Befestigungsstellen (13, 15, 17, 19) für die Anbringung des Aufsatzkühlers (3) an der elektrischen Maschine (2) mittels der Befestigungssysteme (11) aufweist, **dadurch gekennzeichnet, dass** die Befestigungsstellen (13, 15, 17, 19) nur teilweise durch die Befestigungssysteme (11) belegt sind, dass die Belegung der Befestigungsstellen (13, 15, 17, 19) mit den Befestigungssystemen (11) geändert wird und dass dadurch das Schwingungsverhalten des Maschinensystems (1) abgeändert wird.

2. Verfahren nach Anspruch 1,
**dadurch gekennzeichnet, dass** zumindest ein erstes Befestigungssystem (11) durch ein zweites Befestigungssystem (12) unterschiedlichen Typs ausgetauscht wird und dass dadurch ebenfalls das Schwingungsverhalten des Maschinensystems (1) abgeändert wird.

**3.** Verfahren nach einem der Ansprüche 1 oder 2,
**dadurch gekennzeichnet, dass** das Befestigungssystem (11) ein Kopplungselement (23) und eine Schraubverbindung (21) aufweist und dass ein erstes Kopplungselement (23) durch ein zweites Kopplungselement (24) unterschiedlichen Typs ausgetauscht oder ergänzt wird.

**Claims**

**1.** Method of operating a machine system (1) having an electrical machine (2) and an add-on cooler (3), wherein the add-on cooler (3) is mounted on the electrical machine (1) by means of mounting systems (11), wherein the machine system (1) has different mounting locations (13, 15, 17, 19) for mounting of the add-on cooler (3) on the electrical machine (2) by means of the mounting systems (11), **characterised in that** the mounting locations (13, 15, 17, 19) are only partially occupied by the mounting systems (11), **in that** the occupying of the mounting locations (13, 15, 17, 19) with the mounting systems (11) is changed and **in that** the vibration characteristics of the machine system (1) are altered thereby.

**2.** Method according to claim 1,
**characterised in that** at least one first mounting system (11) is replaced with a second mounting system (12) of a different type and **in that** the vibration characteristics of the machine system (1) are also altered thereby.

**3.** Method according to one of claims 1 or 2,
**characterised in that** the mounting system (11) has a coupling element (23) and a screw connection (21) and **in that** a first coupling element (23) is replaced with or supplemented by a second coupling element (24) of a different type.

**Revendications**

**1.** Procédé pour faire fonctionner un système ( 1 ) moteur qui a un moteur ( 2 ) électrique et un dissipateur ( 3 ) de chaleur rapporté, le dissipateur ( 3 ) de chaleur rapporté étant mis sur le moteur (1 ) électrique au moyen de systèmes ( 11 ) de fixation, le système ( 1 ) moteur ayant divers points ( 13, 15, 17, 19 ) de fixation pour la mise du dissipateur ( 3 ) de chaleur rapporté sur le moteur ( 2 ) électrique au moyen des systèmes ( 11 ) de fixation, **caractérisé en ce que** les points ( 13, 15, 17, 19 ) de fixation ne sont occupés qu'en partie par les systèmes (11) de fixation, **en ce que** l'on change l'occupation des points ( 13, 15, 17, 19 ) de fixation par les systèmes ( 11 ) de fixation et **en ce qu'**ainsi on modifie le comportement aux vibrations du système ( 1 ) moteur.

**2.** Procédé suivant la revendication 1,
**caractérisé en ce que** l'on remplace au moins un premier système ( 11 ) de fixation par un deuxième système ( 12 ) de fixation de type différent et **en ce qu'**on modifie ainsi également le comportement aux vibrations du système ( 1 ) moteur.

**3.** Procédé suivant l'une des revendications 1 ou 2,
**caractérisé en ce que** le système ( 11 ) de fixation a un élément ( 23 ) d'accouplement et une liaison ( 21 ) vissée et **en ce que** l'on remplace ou on complète un premier élément ( 23 ) d'accouplement par un deuxième élément ( 24 ) d'accouplement de type différent.

# FIG 1

# FIG 2

## FIG 3

53 53 52

5

41 51

42 50

43 49

44 48

45 46 47

## FIG 4

m2 m3

z2 z3

$F=\widehat{F}*\cos(\Omega*t+\varphi)$

c2 c3

m1

starr

z1

c1

Bei z.B. Unwuchtanregung:

$\widehat{F}=m_2*\varepsilon*\Omega^2$ mit $\varepsilon$: Läuferexentrizität

$\Rightarrow c_2=(f\_biege\_z*2*\pi)^2*m_2$

# FIG 5

EP 1 678 808 B1

## FIG 6

Ständermasse m1 = 5265 kg
Läufermasse m2 = 1350 kg
Kühlermasse m3 = 935 kg
Steifigkeit Läufer c2 = 88,9 kn/mm
Steifigkeit Kühlerankopplung c3 = 5,4 KN/mm
Fundamentsteifigkeit c1 = 268 KN/mm (frei gewählt)

1. Eigenfrequenz [Hz]
2. Eigenfrequenz [Hz]
3. Eigenfrequenz [Hz]

Systemeigenfrequenzen [Hz]

Kühlerankopplungssteifigkeit c3 [ kN/mm]

EP 1 678 808 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 07154940 A